# FASCICULE DE BREVET EUROPEEN

(11) **EP 1 961 265 B1**
(45) Date de publication et mention de la délivrance du brevet: **23.03.2011**
(21) Numéro de dépôt: 06841915.9
(22) Date de dépôt: 12.12.2006
(51) Int. Cl.: H05B 3/82, G21C 1/09

(54) **CANNE CHAUFFANTE POUR PRESSURISEUR DE CIRCUIT PRIMAIRE D'UN REACTEUR NUCLEAIRE A EAU SOUS PRESSION**
DRUCKERHITZER FÜR DAS PRIMÄRKÜHLUNGSSYSTEM EINES DRUCKWASSER-KERNREAKTORS
PRESSURIZER HEATER FOR THE PRIMARY COOLING SYSTEM OF A PRESSURIZED-WATER NUCLEAR REACTOR

(30) Priorité: 16.12.2005 FR 0512853
(43) Date de publication de la demande: 27.08.2008
(73) Titulaire: Areva NP, 92400 Courbevoie (FR)
(72) Inventeur: STELTZLEN, Françoise, F-78400 Chatou (FR); FOUCAULT, Marc, F-71200 Le Creusot (FR); MEYZAUD, Yves, F-61300 Saint Jouin de Blavou (FR); SCOTT, Peter, F-78590 Noisy Le Roi (FR)
(74) Mandataire: Domenego, Bertrand
(86) Numéro de dépôt international: PCT/FR2006/002711
(87) Numéro de publication internationale: WO 2007/068821

(56) Documents cités:
- GB-A- 1 128 819
- GB-A- 2 319 950
- JP-A- 61 087 896

## Description

L'invention concerne en général les cannes chauffantes pour pressuriseur de circuit primaire de réacteur nucléaire à eau sous pression.

Plus précisément, l'invention concerne, selon un premier aspect, une canne chauffante pour un pressuriseur de circuit primaire de réacteur nucléaire à eau sous pression, du type comprenant une enveloppe externe métallique de forme allongée longitudinalement présentant une surface externe, et un organe de chauffage monté à l'intérieur de l'enveloppe.

Une telle canne chauffante est par exemple décrite dans GB 1 128 819.

GB 319 950 décrit un revêtement anti-corrosion pour une plaque chauffante de bouilloire électrique.

De telles cannes sont normalement montées sur la partie inférieure du pressuriseur, et sont immergées dans l'eau du circuit primaire qui remplit partiellement ce pressuriseur. Ces cannes sont mises en service quand on cherche à augmenter la pression de fonctionnement du circuit primaire du réacteur. Elles chauffent l'eau jusqu'à sa température d'ébullition, de telle sorte qu'une partie de celle-ci s'évapore.

On a constaté qu'il se produisait des fuites sur les cannes chauffantes de l'étal de la technique. Il arrive en effet que l'enveloppe externe de l'une de ces car nes se fissure, de telle sorte que l'intérieur de la canne est mis en communication avec l'eau qui se trouve dans le pressuriseur.

Une telle fuite peut avoir pour conséquence la détérioration de l'organe de chauffage de la canne, la perte de fonctionnement de la canne, et même la fuite de l'eau sous pression vers l'extérieur du pressuriseur, à travers l'espace intérieur de la canne.

Dans ce contexte, l'invention vise à proposer des cannes chauffantes de fiabilité améliorée.

A cet effet, l'invention porte sur une canne chauffante du type décrit ci-dessus, caractérisée en ce qu'elle comprend un revêtement de protection contre la corrosion couvrant au moins une partie de la surface externe de l'enveloppe.

La canne peut également présenter une ou plusieurs des caractéristiques ci-dessus, considérées individuellement ou selon toutes les combinaisons techniquement possibles :
- le revêtement comprend majoritairement du nickel ;
- le revêtement comprend au moins 95% en masse de nickel ;
- le revêtement a été déposé sur la surface externe par électrolyse dans un bain de sels de nickel ;
- le revêtement présente une épaisseur supérieure à 50 micromètres ;
- la canne comprend une zone active de chauffage, le revêtement s'étendant longitudinalement au moins le long de toute la zone active de chauffage ;
- le revêtement se prolonge longitudinalement de part et d'autre de la zone active de chauffage sur une distance de garde ;
- la distance de garde est supérieure à 10 millimètres ; et
- l'enveloppe est en acier inoxydable austénitique.

Selon un second aspect, l'invention porte sur un procédé de traitement d'une enveloppe métallique pour une canne chauffante du type ci-dessus, caractérisé en ce qu'il comprend une étape de dépôt du revêtement sur au moins une partie de la surface externe de l'enveloppe dans une cellule électrolytique comprenant un bain et une électrode plongée dans le bain, le bain contenant majoritairement du sulfamate de nickel, du chlorure de nickel, et de l'acide borique, l'enveloppe étant disposée dans le bain et un courant électrique étant maintenu entre l'électrode et l'enveloppe.

Le procédé peut également présenter une ou plusieurs des caractéristiques ci-dessus, considérées individuellement ou selon toutes les combinaisons techniquement possibles :
- le pH du bain est maintenu entre 3 et 5 pendant l'étape de dépôt ;
- l'électrode est en nickel soluble ;
- le courant électrique est maintenu à une densité de courant comprise entre 5 et 50 Ampères par décimètre carré de la surface externe de l'enveloppe à traiter pendant l'étape de dépôt ;
- l'étape de dépôt du revêtement est précédée par une étape préliminaire de dépôt d'une couche d'accrochage sur au moins une partie de la surface externe de l'enveloppe dans une cellule électrolytique comprenant un bain et une électrode plongée dans le bain, le bain étant un bain de Watts comprenant majoritairement du sulfate de nickel, du chlorure de nickel, et de l'acide borique, l'enveloppe étant disposée dans le bain et un courant électrique étant maintenu entre l'électrode et l'enveloppe ;

- le pH du bain est maintenu entre 3 et 5 pendant l'étape préliminaire ;
   et
- la couche d'accrochage présente une épaisseur inférieure à 10 micromètres.

D'autres caractéristiques et avantages de l'invention ressortiront de la description qui en est donnée ci-dessous, à titre indicatif et nullement limitatif, en référence aux figures annexées, parmi lesquelles :
- la figure 1 est une représentation schématique simplifiée du circuit primaire d'un réacteur nucléaire à eau sous pression, comprenant un pressuriseur équipé de cannes chauffantes selon l'invention ;
- la figure 2 est une vue en coupe dans un plan vertical d'une partie inférieure du pressuriseur de la figure 1 ;
- la figure 3 est une vue agrandie d'une partie supérieure d'une canne chauffante du pressuriseur des figures 1 et 2 ;
- la figure 4 est une vue partielle agrandie d'une partie IV de la canne de la figure 3, considérée en coupe dans un plan longitudinal de la canne ; et
- la figure 5 est une représentation schématique simplifiée d'une cellule électrolytique adaptée pour déposer le revêtement de protection contre la corrosion sur les cannes des figures 1 à 4.

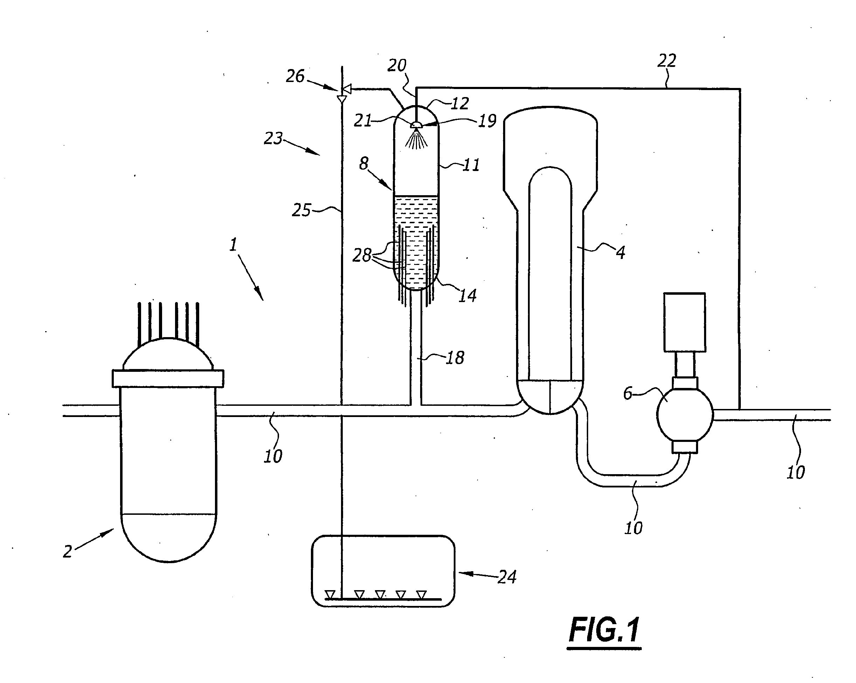

La figure 1 représente un circuit primaire 1 de réacteur nucléaire à eau sous pression. Ce circuit 1 comprend une cuve 2 dans laquelle se trouvent des assemblages de combustible nucléaire, un générateur de vapeur 4 pourvu de parties primaire et secondaire, une pompe primaire 6, et un pressuriseur 8. La cuve 2, le générateur de vapeur 4 et la pompe 6 sont reliés par des tronçons de tuyauterie primaire 10. Le circuit 1 contient de l'eau primaire, cette eau étant refoulée par la pompe 6 vers la cuve 2, traversant la cuve 2 en subissant un échauffement au contact des assemblages combustibles, puis traversant la partie primaire du générateur de vapeur 4 avant de revenir à l'aspiration de la pompe 6. L'eau primaire chauffée dans la cuve 2 cède sa chaleur dans le générateur de vapeur 4 à une eau secondaire traversant la partie secondaire de ce générateur. L'eau secondaire circule en boucle fermée dans un circuit secondaire non-représenté. Elle s'évapore en traversant le générateur 4, la vapeur ainsi produite entraînant une turbine à vapeur.

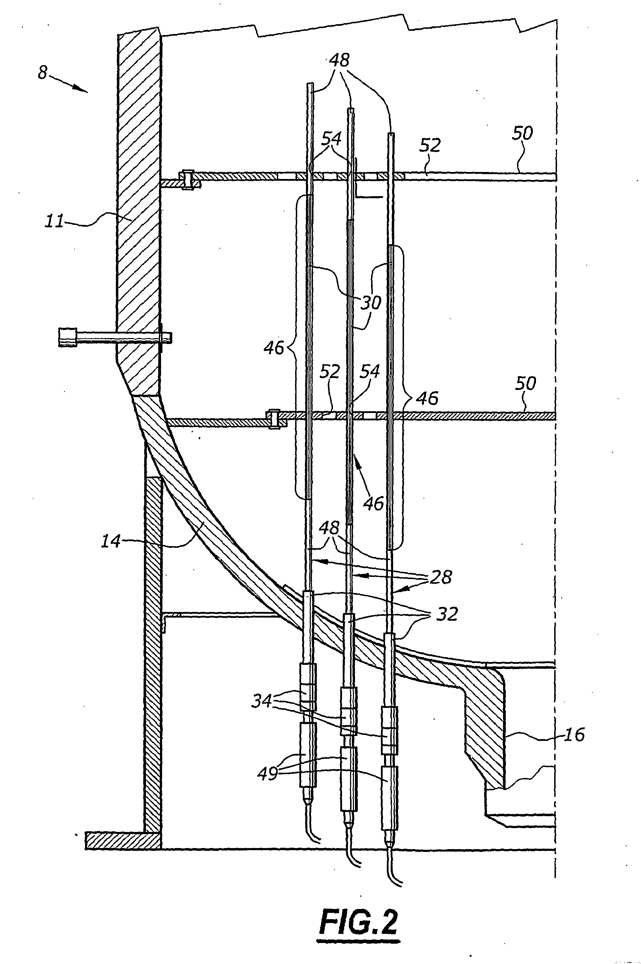

Le pressuriseur 8 est monté en dérivation sur la tuyauterie primaire par un conduit 18 piqué sur le tronçon 10 reliant la cuve 2 au générateur 4. Il est disposé à une élévation supérieure à celle de la pompe 6 et de la cuve 2. Le pressuriseur 8 comprend une enveloppe chaudronnée 11 sensiblement cylindrique et d'axe vertical, pourvue d'un dôme 12 et un fond inférieur 14. Le fond inférieur 14 comporte un orifice central 16 (figure 2) connecté à la tuyauterie primaire par le conduit 18.

Le pressuriseur 8 comporte également des moyens d'aspersion 19 comprenant un piquage 20 traversant le dôme 12, une buse d'aspersion 21 disposée à l'intérieur de l'enveloppe 11 et montée sur le piquage 20, une tuyauterie 22 raccordant le piquage 20 à la tuyauterie primaire, au niveau du refoulement de la pompe 6, et des moyens (non-représentés) pour sélectivement autoriser ou interdire la circulation d'eau primaire dans la tuyauterie 22 jusqu'à la buse 21.

Le circuit primaire 1 comprend également un circuit de sécurité 23 comportant un réservoir de décharge 24, une tuyauterie 25 connectant le réservoir 24 au dôme 12 du pressuriseur, et une soupape de sécurité 26 interposée sur la tuyauterie 25 entre le réservoir 24 et le pressuriseur 8.

L'espace intérieur du pressuriseur 8 est en communication avec le circuit primaire 1, de telle sorte que le pressuriseur 8 est en permanence partiellement rempli par l'eau primaire, le niveau d'eau à l'intérieur du pressuriseur étant fonction de la pression courante de fonctionnement du circuit primaire. Le ciel du pressuriseur 8 est rempli par de la vapeur d'eau, à une pression sensiblement égale à la pression de l'eau circulant dans la tuyauterie primaire 10 reliant le générateur 4.

En cas de surpression dans le pressuriseur, la soupape 26 s'ouvre et la vapeur d'eau est évacuée jusqu'au réservoir 24, dans laquelle elle se condense.

Le pressuriseur 8 est équipé de plusieurs dizaines de cannes chauffantes électriques 28. Ces cannes sont disposées verticalement, et sont montées sur le fond inférieur 14. Elles traversent le fond 14 par des orifices prévus à cet effet, des moyens d'étanchéité étant interposés entre les cannes et le fond 14.

Les cannes 28 présentent une grande longueur, typiquement comprise entre 1 m et 2,50 m, et une faible section au regard de leur longueur.

Chaque canne 28 comprend une partie 30 (fig. 2) disposée à l'intérieur de l'enveloppe 11 du pressuriseur et immergée dans l'eau remplissant partiellement celui-ci, une partie intermédiaire 32 montée dans un orifice du fond 14, et une partie de connexion 34 disposée à l'extérieur de l'enveloppe 11.

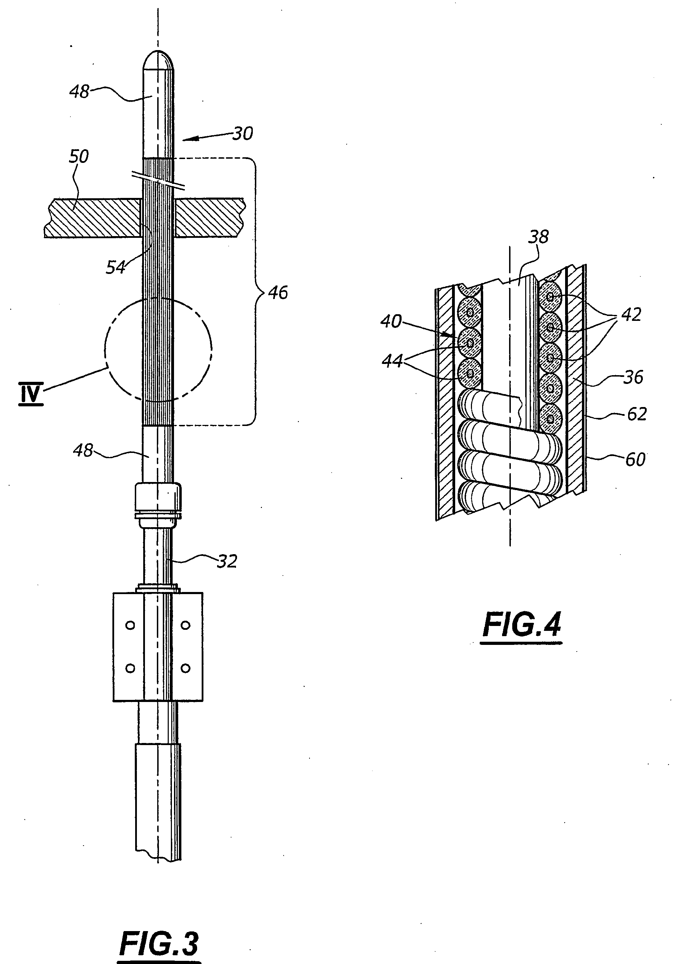

Comme le montre la figure 4, la partie immergée 30 comprend une enveloppe externe 36 de forme cylindrique en acier ou alliage inoxydable, généralement un mandrin central 38 disposé à l'intérieur de l'enveloppe 36 selon l'axe central de celle-ci, et un fil chauffant 40 enroulé autour du mandrin 38 en spirale, et interposé entre le mandrin 38 et l'enveloppe 36.

Le fil chauffant 40 comprend une âme métallique résistive électriquement conductrice 42, par exemple en cuivre ou en alliage nickel-chrome, et une gaine métallique en acier 44 entourant l'âme 42 isolée électriquement par de la magnésie. Elle est en contact avec une face intérieure de l'enveloppe 36.

Le fil 40 est disposé de façon à créer, dans la partie immergée 30, une zone longitudinale centrale chauffante 46 (fig. 2), et deux zones longitudinales non chauffantes 48, disposées de part et d'autre de la zone chauffante 46.

Dans la zone chauffante 46, le mandrin 38 est en cuivre, et le fil 40 est enroulé autour du mandrin 38, en formant des spires jointives.

Le fil 40 s'étend le long de la partie intermédiaire 32, à l'intérieur de celle-ci, et est raccordé à un connecteur électrique 49 situé dans la partie 34. Ce connecteur 49 est relié électriquement à un générateur électrique (non représenté) apte à faire circuler un courant électrique dans le fil 40.

La partie immergée 30 présente une longueur longitudinale de, par exemple, 2150 mm. La zone chauffante 46 présente une longueur longitudinale de, par exemple, 1100 mm. La zone non chauffante 48 interposée entre la zone 46 et la partie intermédiaire 32 présente une longueur longitudinale de, par exemple, 450 mm. La zone non-chauffante 48 située de l'autre côté de la zone chauffante 46 présente une longueur longitudinale d'environ 550 mm. L'enveloppe externe 36 présente un diamètre extérieur constant le long de toute la partie 30, par exemple de 22 mm. Les parties 32 et 34 présentent au total une longueur longitudinale de, par exemple, 340 mm.

La puissance électrique de chaque canne 28 varie de 6 à 30 kW. Elle délivre un flux thermique qui varie entre 20 et 50 W/cm², considéré au niveau de la surface extérieure de l'enveloppe 36.

Le pressuriseur 8 comprend en outre des plaques guide 50 de maintien des cannes 28, visibles sur la figure 2. Ces plaques guide 50 s'étendent sensiblement horizontalement sur toute la section interne du pressuriseur 8. Elles sont disposées les unes au-dessus des autres, à différents niveaux verticaux dans le pressuriseur 8. Chacune comporte des lumières 52 permettant la circulation de l'eau à travers les plaques 50, et des trous 54 de guidage des cannes 28.

Les trous 54 sont circulaires et présentent un diamètre légèrement supérieur au diamètre extérieur de la partie immergée 30 des cannes (figure 3). Cette partie 30 traverse les différentes plaques 50, par des trous 54 superposés, de telle sorte que les cannes 28 sont guidées à plusieurs niveaux et sont maintenues dans une orientation sensiblement verticale par les plaques 50. L'enveloppe externe 36 de la canne n'est normalement pas en contact avec les bords des trous 54.

Le pressuriseur 8 a pour fonction de contrôler la pression de l'eau dans le circuit primaire. Du fait qu'il communique par le tuyau 18 avec la tuyauterie primaire, il joue un rôle de vase d'expansion. Ainsi, quand le volume d'eau en circulation dans le circuit primaire augmente ou diminue, le niveau d'eau à l'intérieur du pressuriseur 8 va, selon le cas, s'élever ou s'abaisser.

Cette variation du volume d'eau peut résulter par exemple d'une injection d'eau dans le circuit primaire, ou d'une variation de la température de fonctionnement du circuit primaire.

Le pressuriseur 8 a également pour fonction d'augmenter ou de diminuer la pression de fonctionnement du circuit primaire.

Pour augmenter la pression de fonctionnement du circuit primaire, on alimente électriquement les cannes de chauffage 28, de telle sorte que celles-ci chauffent l'eau contenue dans la partie inférieure du pressuriseur et l'amènent à sa température d'ébullition. Une partie de cette eau bout, de telle sorte que la pression dans le ciel du pressuriseur 8 augmente. Du fait que la vapeur est constamment en équilibre hydrostatique avec l'eau circulant dans le circuit primaire 1, la pression de fonctionnement de ce circuit primaire 1 augmente.

Pour faire diminuer la pression de fonctionnement du circuit primaire 1, on met en fonctionnement la buse d'aspersion 21 disposée dans le ciel du pressuriseur 8 en autorisant la circulation d'eau dans la tuyauterie 22 à l'aide des moyens prévus à cet effet. L'eau prélevée dans la tuyauterie primaire 10 au refoulement de la pompe 6 est projetée dans le ciel du pressuriseur 8, et provoque la condensation d'une partie de la vapeur d'eau qui s'y trouve. La pression de la vapeur d'eau dans le ciel du pressuriseur 8 diminue, de telle sorte que la pression de fonctionnement du circuit primaire 1 diminue elle aussi.

Comme le montre la figure 4, les cannes chauffantes 28 comprennent chacune un revêtement 60 de protection contre la corrosion, couvrant au moins une partie de la surface externe 62 de l'enveloppe 36. Ce revêtement 60 s'étend longitudinalement sur toute la zone chauffante 46 de la canne, et s'étend également longitudinalement de part et d'autre de cette zone 46 sur une distance de garde. Cette distance de garde est supérieure à 10 mm, de préférence supérieure à 30 mm et est typiquement de l'ordre de 50 mm à 100 mm. Le revêtement 60 s'étend sur toute la périphérie de l'enveloppe externe 36, de telle sorte qu'il couvre complètement l'enveloppe 36 dans la zone de chauffage 46 et dans une partie des zones 48, sur la distance de garde.

Le revêtement 60 comprend majoritairement du nickel, et de préférence comprend au moins 95 % de nickel en masse. Dans un mode de réalisation préféré, le revêtement est un revêtement de nickel pur ou pratiquement pur, déposé électrolytiquement, comme expliqué ci-dessous.

Le revêtement 60 présente une épaisseur supérieure à 50 µm, et inférieure à 200 µm. De préférence, il présente une épaisseur de 100 µm environ.

On va maintenant décrire le procédé de dépôt du revêtement 60 sur la surface 62 de l'enveloppe externe.

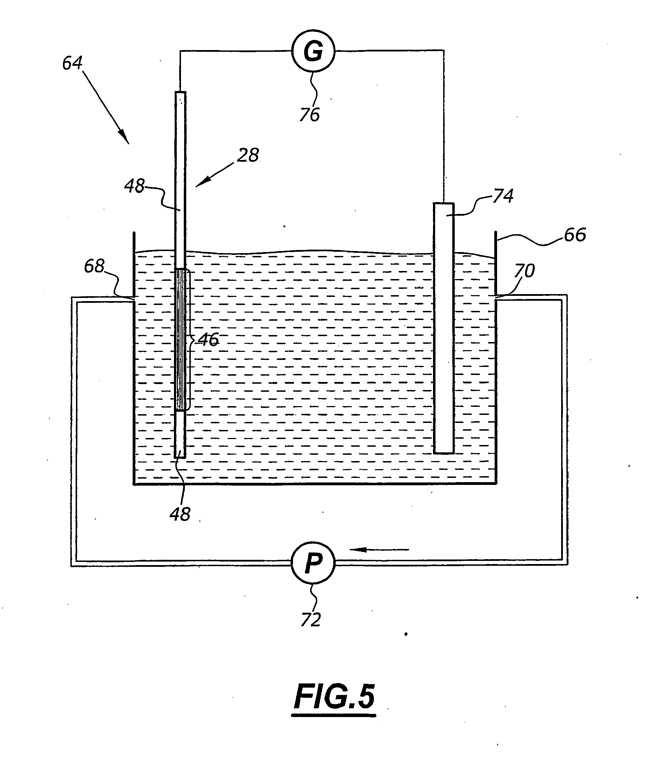

Les principales étapes de ce procédé sont réalisées dans une cellule électrolytique du type représenté sur la figure 5. Cette cellule 64 comprend une cuve 66 susceptible de contenir un bain de traitement et pourvue d'une entrée 68 et d'une sortie 70, une pompe 72 de circulation du liquide formant le bain, depuis la sortie 70 jusqu'à l'entrée 68 de la cuve, une électrode 74 immergée dans le bain, et un générateur électrique 76. L'électrode 74 est en nickel soluble. Le générateur électrique 76 est susceptible d'être raccordé électriquement, d'une part, à l'électrode 74 et, d'autre part, à la canne 28 à traiter. Il est apte à maintenir une différence de potentiel entre l'électrode 74 et la canne à traiter 28.

Le procédé de traitement comprend les étapes successives suivantes.
Etape 1- Fourniture d'une canne chauffante 28 à traiter. Cette canne est équipé de tous ses équipements internes (noyau 38, fil chauffant 40).
Etape 2 - Dégraissage de la surface externe 62 de l'enveloppe 36.
Etape 3 - Décapage de la surface à revêtir avec de l'acide sulfurique.
Etape 4 - Attaque en polarité inverse de façon à dissoudre la couche superficielle de la surface à revêtir. Cette étape peut être réalisée dans la cellule 64. Dans ce cas, celle-ci est remplie par une solution adaptée, la partie immergée 30 de la canne étant immergée dans la solution, et le générateur électrique 76 étant monté de façon à maintenir l'enveloppe 36 à un potentiel positif et l'électrode 74 à un potentiel négatif. A la fin de cette étape, la couche superficielle d'origine de l'enveloppe 36 a été dissoute, et a été remplacée par une nouvelle surface recouverte d'un film passif fraîchement formé.
Etape 5 - Attaque en polarité normale, de manière à dépassiver la surface à revêtir. Cette étape peut être réalisée dans-la cellule électrolytique 64. Dans ce cas, celle-ci est remplie d'un bain d'électrolyte adapté, la partie 30 de la canne étant, comme précédemment, immergée dans ce bain. Le générateur 76 est cette fois monté de façon à maintenir l'enveloppe 36 à un potentiel négatif et l'électrode 74 à un potentiel positif. Cette étape permet de supprimer le film passif formé à l'étape précédente 4, et de mettre le métal de l'enveloppe 36 à nu de façon à permettre une meilleure adhérence du revêtement 60.
Etape 6 - Dépôt d'une couche d'accrochage. Cette couche d'accrochage fait partie du revêtement 60, et ne comprend pratiquement que du nickel. Elle présente une épaisseur inférieure à 10 µm, de préférence égale à 2 µm. Au cours de cette étape, la cuve 66 est remplie avec un bain de Watts très acide, composé principalement de sulfate de nickel, de chlorure de nickel et d'acide borique. Le pH de la solution est maintenu entre 3 et 5. Le générateur électrique 76 maintient l'électrode 74 à un potentiel positif, et l'enveloppe 36 à un potentiel négatif. La pompe 72 assure une recirculation du bain en permanence pendant l'étape 6, un flux de liquide étant soutiré de la cuve 66 par la sortie 70 et réinjecté par l'entrée 68.
Etape 7 - Dépôt du revêtement 60 proprement dit, la couche d'accrochage faisant également partie du revêtement 60. Ce dépôt est effectué dans la cellule 64. La cuve 66 est remplie d'un bain au sulfamate, comprenant essentiellement du sulfamate de nickel, du chlorure de nickel et de l'acide borique. Le pH du bain est maintenu entre 3 et 5 pendant cette étape, de préférence à environ 4,5. Le générateur électrique 76 maintient l'électrode 74 à un potentiel positif, et l'enveloppe 36 à un potentiel négatif. Un courant électrique est ainsi maintenu entre l'électrode 74 et l'enveloppe 36 de la canne, la densité de courant étant comprise entre 5 et 50 Ampère/dm² de la surface externe de l'enveloppe à traiter. De préférence, la densité de courant est de l'ordre de 20 Ampère/dm². La couche de nickel déposée pendant l'étape 7 présente une épaisseur de l'ordre de 100 µm.

Pendant les étapes 3 à 7, les parties de la surface externe 62 de la canne qui ne sont pas destinées à recevoir le revêtement sont protégées par une couche protectrice adaptée, par exemple un vernis organique.

Les cannes chauffantes et le procédé de traitement décrits ci-dessus présentent de multiples avantages.

Le revêtement 60 couvrant partiellement la surface externe de l'enveloppe 36 permet de protéger ces cannes contre la corrosion et d'améliorer la tenue en service des cannes.

En effet, les inventeurs ont découvert que, dans certaines conditions de fonctionnement, il se développe un milieu caustique entre la zone chauffante 46 de la canne et les plaques guide 50, et plus précisément entre la zone 46 et les bords des trous 54. Cet interstice constitue un espace confiné, dans lequel l'eau circule peu et se renouvelle lentement, de telle sorte qu'il peut se produire dans cet espace une surchauffe avec ébullition, entraînant la création d'un milieu caustique.

Le revêtement 60 permet d'éviter que ne se développe une corrosion sous contrainte de l'enveloppe 36 en particulier au niveau des plaques 50, cette corrosion pouvant entraîner la fissuration de l'enveloppe 36, et la mise en communication de l'intérieur de la canne 28 avec l'eau primaire. Ainsi, la fiabilité des cannes 28 est améliorée.

Le revêtement électrolytique de nickel choisi dans l'exemple précité pour couvrir partiellement les enveloppes des cannes est particulièrement adapté, car :
- il est compatible avec l'acier inoxydable constituant les enveloppes 36 des cannes chauffantes ;
- il est autorisé dans le circuit primaire du fait de sa grande pureté ;
- il est résistant à la corrosion dans les conditions de fonctionnement caractéristiques du pressuriseur (composition chimique de l'eau primaire, température, pression) ; et
- il est résistant à la corrosion sous contrainte dans le milieu primaire nominal.

L'utilisation d'une électrode 74 en nickel soluble dans la cellule 64 servant à déposer le revêtement 60 est particulièrement adaptée, car elle permet de maintenir une composition du bain pratiquement constante pendant les phases 6 et 7, et garantit par conséquence une qualité de nickel constante et reproductible tout au long de l'opération de nickelage.

Par ailleurs, toutes les étapes du procédé sont effectuées à des températures très inférieures à la température de fusion du cuivre, typiquement 60°C. Il n'y a donc aucun risque d'endommagement de la partie électrique de la canne (fil de cuivre) pendant l'opération de dépôt du nickel, et donc aucun risque de provoquer par la suite des défaillances électriques.

Le revêtement 60 résiste à la corrosion y compris en situation d'essai à chaud du circuit primaire du réacteur ou en situation d'extension de cycle, un milieu basique pouvant se développer dans le pressuriseur dans ces deux situations. Une situation d'extension de cycle correspond à une exploitation prolongée du réacteur nucléaire entre deux arrêts à froid pour déchargement de certains assemblages de combustible.

La géométrie des cannes chauffantes est pratiquement inchangée par rapport à l'état de la technique. Pour obtenir exactement le même diamètre extérieur pour la partie immergée 30, il est possible d'enlever par rectification une couche d'environ 100 µm dans l'enveloppe externe, avant dépôt du revêtement électrolytique.

Les cannes chauffantes 28 et le procédé de traitement décrits ci-dessus peuvent présenter de multiples variantes.

Le revêtement 60 peut couvrir la totalité de la partie immergée 30, non seulement la zone 46 mais également les zones 48 disposées de part et d'autre de la zone 46.

Il est possible d'utiliser un autre matériau que le nickel pour le revêtement 60. Ce matériau peut par exemple être du chrome, ou un matériau plus noble que le nickel tel que le platine ou l'or.

La canne 28 peut comprendre une partie interne différente de celle qui a été décrite ci-dessus (mandrin 38, fil chauffant 40).

L'enveloppe externe 36 de la canne 28 peut ne pas être en acier inoxydable austénitique mais par exemple en Inconel 690.

Les cannes chauffantes peuvent présenter des dimensions différentes de celles mentionnées ci-dessus (longueur totale de la partie 30, diamètre extérieur, longueur de la zone chauffante 46, des zones non chauffantes 48, etc...).

## Revendications

1. Canne chauffante (28) pour un pressuriseur (8) de circuit primaire (1) de réacteur nucléaire à eau sous pression, cette canne comprenant une enveloppe externe (36) métallique de forme allongée longitudinalement présentant une surface externe (62), et un organe de chauffage (40) monté à l'intérieur de l'enveloppe (36), **caractérisée en ce qu'**elle comprend un revêtement (60) de protection contre la corrosion couvrant au moins une partie de la surface externe (62) de l'enveloppe (36), **en ce que** la canne chauffante (28) comprend une zone active de chauffage (46) et deux zones longitudinales non chauffantes (48), disposées de part et d'autre de la zone active de chauffage (46), et **en ce que** le revêtement (60) s'étend longitudinalement au moins le long de toute la zone active de chauffage (46) et se prolonge longitudinalement dans les zones longitudinales non chauffantes (48) sur une distance de garde.

2. Canne selon la revendication 1, **caractérisée en ce que** le revêtement (60) comprend majoritairement du nickel.

3. Canne selon la revendication 2, **caractérisée en ce que** le revêtement (60) comprend au moins 95% en masse de nickel.

4. Canne selon la revendication 2 ou 3, **caractérisée en ce que** le revêtement (60) a été déposé sur la surface externe (62) par électrolyse dans un bain de sels de nickel.

5. Canne selon l'une quelconque des revendications 1 à 4, **caractérisée en ce que** le revêtement (60) présente une épaisseur supérieure à 50 micromètres.

6. Canne selon l'une quelconque des revendications 1 à 5, **caractérisée en ce que** la distance de garde est supérieure à 10 millimètres.

7. Canne selon l'une quelconque des revendications 1 à 6, **caractérisée en ce que** l'enveloppe (36) est en acier inoxydable austénitique.

8. Procédé de traitement d'une enveloppe externe métallique (36) pour canne chauffante (28) selon l'une quelconque des revendications 1 à 7, **caractérisé en ce qu'**il comprend une étape de dépôt du revêtement (60) sur au moins une partie de la surface externe (62) de l'enveloppe (36) dans une cellule électrolytique (64) comprenant un bain et une électrode (74) plongée dans le bain, le bain contenant majoritairement du sulfamate de nickel, du chlorure de nickel, et de l'acide borique, l'enveloppe (36) étant disposée dans le bain et un courant électrique étant maintenu entre l'électrode (74) et l'enveloppe (36).

9. Procédé selon la revendication 8, **caractérisé en ce que** le pH du bain est maintenu entre 3 et 5 pendant l'étape de dépôt.

10. Procédé selon la revendication 8 ou 9, **caractérisé en ce que** l'électrode (74) est en nickel soluble.

11. Procédé selon l'une quelconque des revendications 8 à 10, **caractérisé en ce que** le courant électrique est maintenu à une densité de courant comprise entre 5 et 50 Ampères par décimètre carré de la surface externe (62) de l'enveloppe (36) à traiter pendant l'étape de dépôt.

12. Procédé selon l'une quelconque des revendications 8 à 10, **caractérisé en ce que** l'étape de dépôt du revêtement (60) est précédée par une étape préliminaire de dépôt d'une couche d'accrochage sur au moins une partie de la surface externe (62) de l'enveloppe (36) dans une cellule électrolytique (64) comprenant un bain et une électrode (74) plongée dans le bain, le bain étant un bain de Watts comprenant majoritairement du sulfate de nickel, du chlorure de nickel, et de l'acide borique, l'enveloppe (36) étant disposée dans le bain et un courant électrique étant maintenu entre l'électrode (74) et l'enveloppe (36).

13. Procédé selon la revendication 12, **caractérisé en ce que** le pH du bain est maintenu entre 3 et 5 pendant l'étape préliminaire.

14. Procédé selon la revendication 12 ou 13, **caractérisé en ce que** la couche d'accrochage présente une épaisseur inférieure à 10 micromètres.

## Claims

1. Heating rod (28) for a pressurizer (8) of a primary cooling system (1) of a pressurized-water nuclear reactor, the rod comprising a metal outer shell (36) of longitudinally elongate shape having an external surface (62), and a heating element (40) mounted inside the shell (36), **characterized in that** it comprises an anti-corrosion coating (60) covering at least part of the external surface (62) of the shell (36), **in that** the heating rod (28) comprises an active heating zone (46) and two longitudinal non-heating zones (48) disposed on each side of the active heating zone (46), and **in that** the coating (60) extends longitudinally at least along the whole of the active heating zone (46) and continues longitudinally in the longitudinal non-heating zones (48) over a guard distance.

2. Rod according to claim 1, **characterized in that** the coating (60) predominantly comprises nickel.

3. Rod according to claim 2, **characterized in that** the coating (60) comprises at least 95 % by weight nickel.

4. Rod according to claim 2 or 3, **characterized in that** the coating (60) has been deposited on the external surface (62) by electrolysis in a bath of nickel salts.

5. Rod according to any one of claims 1 to 4, **characterized in that** the coating (60) has a thickness greater than 50 micrometers.

6. Rod according to any one of claims 1 to 5, **characterized in that** the guard distance is greater than 10 millimeters.

7. Rod according to any one of claims 1 to 6, **characterized in that** the shell (36) is made of austenitic stainless steel.

8. Method of treating a metal outer shell (36) for a heating rod (28) according to any one of claims 1 to 7, **characterized in that** it comprises a step of depositing the coating (60) on at least part of the external surface (62) of the shell (36) in an electrolytic cell (64) comprising a bath and an electrode (74) immersed in the bath, the bath predominantly comprising nickel sulfamate, nickel chloride and boric acid, the shell (36) being disposed in the bath and an electric current being maintained between the electrode (74) and the shell (36).

9. Method according to claim 8, **characterized in that** the pH of the bath is maintained between 3 and 5 during the deposition step.

10. Method according to claim 8 or 9, **characterized in that** the electrode (74) is made of soluble nickel.

11. Method according to any one of claims 8 to 10, **characterized in that** the electric current is maintained at a current density between 5 and 50 amperes per square decimeter of the external surface (62) of the shell (36) that is to be treated during the deposition step.

12. Method according to any one of claims 8 to 10, **characterized in that** the step of depositing the coating (60) is preceded by a preliminary step of depositing an adhesion layer on at least part of the external surface (62) of the shell (36) in an electrolytic cell (64) comprising a bath and an electrode (74) immersed in the bath, the bath being a Watts bath predominantly comprising nickel sulfate, nickel chloride and boric acid, the shell (36) being disposed in the bath and an electric current being maintained between the electrode (74) and the shell (36).

13. Method according to claim 12, **characterized in that** the pH of the bath is maintained between 3 and 5 during the preliminary step.

14. Method according to claim 12 or 13, **characterized in that** the adhesion layer has a thickness less than 10 micrometers.

## Patentansprüche

1. Heizstab (28) für einen Druckgeber (8) des Primärkreislaufs (1) eines Druckwasserkernreaktors, wobei der Stab aufweist: eine äußere Metallhülle (36) mit in Längsrichtung langgestreckter Form, die eine Außenfläche (62) aufweist, und ein im Inneren der Hülle (36) montiertes Heizmittel (40), **dadurch gekennzeichnet, dass** er eine Beschichtung (60) zum Schutz gegen Korrosion aufweist, die mindestens einen Teil der Außenfläche (62) der Hülle (36) bedeckt, dass der Heizstab (28) eine aktive Heizzone (46) und zwei nicht heizende Längszonen (48) aufweist, die auf beiden Seiten der aktiven Heizzone (46) angeordnet sind, und dass sich die Beschichtung (60) in Längsrichtung zumindest entlang der gesamten aktiven Heizzone (46) erstreckt und sich in Längsrichtung über einen Schutzabstand in die nicht heizenden Längszonen (48) ausdehnt.

2. Stab gemäß Anspruch 1, **dadurch gekennzeichnet, dass** die Beschichtung (60) überwiegend Nickel aufweist.

3. Stab gemäß Anspruch 2, **dadurch gekennzeichnet, dass** die Beschichtung (60) mindestens 95 Gew.-% Nickel aufweist.

4. Stab gemäß Anspruch 2 oder 3, **dadurch gekennzeichnet, dass** die Beschichtung (60) mittels Elektrolyse in einem Bad von Nickelsalzen auf die Außenfläche (62) aufgebracht wurde.

5. Stab gemäß einem der Ansprüche 1 bis 4, **dadurch gekennzeichnet, dass** die Beschichtung (60) eine Dicke von größer als 50 Mikrometer aufweist.

6. Stab gemäß einem der Ansprüche 1 bis 5, **dadurch gekennzeichnet, dass** der Schutzabstand größer als 10 Millimeter ist.

7. Stab gemäß einem der Ansprüche 1 bis 6, **dadurch gekennzeichnet, dass** die Hülle (36) aus austenitischem rostfreiem Stahl ist.

8. Verfahren zur Bearbeitung einer äußeren Metallhülle (36) für einen Heizstab (28) gemäß einem der Ansprüche 1 bis 7, **dadurch gekennzeichnet, dass** es aufweist: einen Schritt des Aufbringens der Beschichtung (60) auf mindestens einen Teil der Außenfläche (62) der Hülle (36) in einer elektrolytischen Zelle (64), die ein Bad und eine in das Bad eingetauchte Elektrode (74) aufweist, wobei das Bad überwiegend Nickelsulfamat, Nickelchlorid und Borsäure aufweist, wobei die Hülle (36) in dem Bad angeordnet wird und zwischen der Elektrode (74) und der Hülle (36) ein elektrischer Strom aufrechterhalten wird.

9. Verfahren gemäß Anspruch 8, **dadurch gekennzeichnet, dass** der pH-Wert des Bades während des Schrittes des Aufbringens zwischen 3 und 5 gehalten wird.

10. Verfahren gemäß Anspruch 8 oder 9, **dadurch gekennzeichnet, dass** die Elektrode (74) aus löslichem Nickel ist.

11. Verfahren gemäß einem der Ansprüche 8 bis 10, **dadurch gekennzeichnet, dass** der elektrische Strom während des Schrittes des Aufbringens mit einer Stromdichte zwischen 5 und 50 Ampere pro Quadratdezimeter der Außenfläche (62) der zu behandelnden Hülle (36) aufrechterhalten wird.

12. Verfahren gemäß einem der Ansprüche 8 bis 10, **dadurch gekennzeichnet, dass** dem Schritt des Aufbringens der Beschichtung (60) ein einleitender Schritt des Aufbringens einer Haftschicht auf zumindest einen Teil der Außenfläche (62) der Hülle (36) in einer elektrolytischen Zelle (64) vorausgeht, die ein Bad und eine in das Bad eingetauchte Elektrode (74) aufweist, wobei das Bad ein Watts-Bad ist, das überwiegend Nickelsulfat, Nickelchlorid und Borsäure enthält, wobei die Hülle (36) in dem Bad angeordnet wird und ein elektrischer Strom zwischen der Elektrode (74) und der Hülle (36) aufrechterhalten wird.

13. Verfahren gemäß Anspruch 12, **dadurch gekennzeichnet, dass** der pH-Wert des Bades während des einleitenden Schrittes zwischen 3 und 5 gehalten wird.

14. Verfahren gemäß Anspruch 12 oder 13, **dadurch gekennzeichnet, dass** die Haftschicht eine Dicke von kleiner als 10 Mikrometer aufweist.
